# EUROPÄISCHE PATENTSCHRIFT

(11) **EP 2 635 417 B1**
(45) Veröffentlichungstag und Bekanntmachung des Hinweises auf die Patenterteilung: **02.09.2015**
(21) Anmeldenummer: 11782097.7
(22) Anmeldetag: 03.11.2011
(51) Int. Cl.: B32B 5/02, B32B 5/06, B32B 7/12, B29C 70/08, D04H 1/4374, D04H 3/045, D04H 11/00, D01G 1/04, D01G 13/00, D01G 15/00, D04H 1/74, D04H 1/498, D04H 1/4274, D04H 1/4242, B29B 11/16, D01G 7/00, D04H 5/02, D04H 1/46, D04H 1/06

(54) **FLORSCHICHT MIT GEKRÜMMT VERLAUFENDEN BÜNDELN**
PILE LAYER HAVING CURVED BUNDLES
COUCHE DE TISSU À POILS AYANT DES FAISCEAUX DE FIBRES COURBÉS

(30) Priorität: 06.07.2011 DE 102011078739; 06.07.2011 DE 102011078741; 21.06.2011 DE 102011077879; 21.06.2011 DE 102011077881; 21.06.2011 DE 102011077880; 03.11.2010 DE 102010043349; 03.11.2010 DE 102010043346; 03.11.2010 DE 102010043300; 03.11.2010 DE 102010043345; 03.11.2010 DE 102010043347
(43) Veröffentlichungstag der Anmeldung: 11.09.2013
(73) Patentinhaber: SGL Automotive Carbon Fibers GmbH & Co. KG, 80939 München (DE)
(72) Erfinder: REITER, Birgit, 40227Düsseldorf (DE); DANZER, Martin, 93047Regensburg (DE); ORTLEPP, Gerald, 07407 Uhlstädt-Kirchhasel (DE)
(86) Internationale Anmeldenummer: PCT/EP2011/069315
(87) Internationale Veröffentlichungsnummer: WO 2012/059539

(56) Entgegenhaltungen:
- EP-A1- 0 892 101
- WO-A1-2010/013645
- WO-A1-2011/101094
- WO-A2-2011/095826
- WO-A2-2011/101093
- DE-A1-102008 004 005
- DE-A1-102009 023 529
- JP-A- 1 040 532
- JP-A- 2000 054 252
- DATABASE WPI Week 198905 Thomson Scientific, London, GB; AN 1989-035285 XP002667875, & JP 63 307915 A (DAINIPPON INK & CHEM KK) 15. Dezember 1988 (1988-12-15)

## Beschreibung

Die vorliegende Erfindung betrifft eine Florschicht, welche eine Mehrzahl an Carbonfasern umfassende Bündel aufweist gemäß dem Oberbegriff nach Anspruch 1, sowie ein Verfahren zur Herstellung einer solchen Florschicht, nach dem Oberbegriff gemäß Anspruch 12. Weiter betrifft die Erfindung ein Vlies oder einen Vliesstoff gemäß dem Oberbegriff nach Anspruch 11.

Florschichten, welche Carbonfasern umfassen, eigenen sich besonders gut als Ausgangsstrukturen für die Herstellung von Vliesen oder Vliesstoffen, die in zahlreichen Anwendungen der Automobilindustrie eingesetzt werden. Vor allem werden sie zur Herstellung von Automobilbauteilen verwendet. Insbesondere nach geeigneter Imprägnierung mit einem Polymer oder Harz, etwa in einem RTM-Verfahren, werden die betreffenden Vliese und Vliesstoffe vorteilhaft zu leichten, jedoch mechanisch sehr belastbaren Faserverbundstrukturen verarbeitet, die zunehmend als bevorzugter und zukunftsweisender Werkstoff angesehen werden.

Zur Florbildung werden typischerweise Einzelfasern einer vorbestimmten Längenverteilung über geeignete Einspeisevorrichtungen einer Florbildemaschine zugeführt. Eine solche Florbildemaschine kann beispielsweise als Krempel ausgeführt sein. Durch geeignete funktionelle Bauteile in der Florbildemaschine werden die Einzelfasern miteinander verschlungen, so dass eine flächige Struktur ausgebildet wird, welche durch die Faserverschlingungen eine ausreichende Eigenstabilität aufweist, die äußeren mechanischen Einwirkungen beim weiteren Verarbeiten der Florschichten standhalten kann.

In einer Krempel werden etwa die an einem Tambour angeordneten Arbeiter- bzw. Wenderwalzen so betrieben, dass sie sich gegenläufig zum Tambour drehen und auf diese Weise Fasern, welche in die Krempel eingeführt worden sind, in ein Wirrlage an Fasern transportieren, bzw. die Fasern in dieser Wirrlage geeignet verschlingen.

Durch das mehrmalige Bearbeiten bzw. Wenden wird eine Florschicht geschaffen, welche eine ausreichende Eigenstabilität aufweist, um etwa von der Krempel ohne Zerstörung abgenommen und anschließend weiter verarbeitet zu werden. Der Aufbau einer typischen Krempel entspricht etwa einer Beschreibung nach DIN 64118.

Die aus den Florbildemaschinen entnommenen Florschichten können in weiteren Schritten zu Vliesstoffen verarbeitet werden. So können die Florschichten etwa durch Doublieren, d.h. durch Übereinanderlegen der Florschichten, in ein Vlies mit gewünschter Dicke und einem geeigneten Gesamtfasergehalt überführt werden, welches nach Verfestigen, etwa durch Vernadeln, als Vliesstoff einem weiteren Verarbeitungsprozess zugeführt werden kann. Vliesstoffe unterscheiden sich von gewöhnlichen Vliesen, allgemein dadurch, dass sie eine chemische, mechanische oder thermische Verfestigung erfahren haben.

Vliese lassen sich neben den oben beschriebenen mechanischen Verfahren auch mittels aerodynamischer Herstellungsverfahren erzeugen. Hierbei werden die Fasern etwa nach Vereinzelung einem Luftstrom zugeführt, der sie auf eine Siebtrommel oder ein Siebband ablegt. Die Siebtrommel oder das Siebband transportieren die wirr bzw. ohne vorgegebene Orientierung liegenden Fasern weiter, während die Luft über die Sieböffnungen abgesaugt wird. Die in Folge der Luftabführung verdichteten und auf dem Sieb zurück bleibenden Fasern formen ein Vlies aus. Aerodynamische Vliesbildeverfahren eignen sich besonders gut für die Verarbeitung von dickeren und weniger gekräuselten Fasern.

Alternativ können Vliese etwa auch mittels nasser Herstellungsverfahren unter Verwendung von Fließmitteln, wie etwa Wasser, hergestellt werden, wobei während dieser Verfahren die Fasern in dem Fließmittel suspendiert werden und einem Sieb zum Abfiltrieren des Fließmittels zugeführt werden. Die zurück bleibende Faserschicht formt das Vlies aus, welches noch durch geeignete Trockenverfahren weiter aufbereitet werden kann.

Im Rahmen der vorliegenden Erfindung wird nicht zwischen einer Florschicht und einem Vlies unterschieden. Alle diese Strukturen werden in einem Verfahren gewonnen, welches die Verschlingung von Fasern zu einer flächigen Struktur zum Ziel hat, welche eine gewünschte Eigenstabilität aufweist. Der Vliesstoff unterscheidet sich andererseits vom Vlies bzw. von der Florschicht durch einen weiteren Schritt der nachfolgenden Verfestigung, wie weiter oben beschrieben wurde:

Problematisch an den beschriebenen Verfahren erweist sich, dass die den Florbildemaschinen zugeführten Einzelfasern typischerweise einer aufwendigen mechanischen Aufbereitung unterworfen werden müssen. Hierzu werden, wie etwa in der klassischen Spinnerei, Öffnungs- und/oder Mischanlagen eingesetzt, die die Aufschließung und Aufbereitung der Fasern vornehmen. Gerade auch bei der Herstellung von Florschichten mittels Carbonfasern ist eine aufwendige Aufbereitung der Carbonfasern erforderlich. So sind etwa die Carbonfasern aus Carbonfasersträngen zu entnehmen. Diese müssen hierzu zunächst einmal von einer Spule entnommen und einer Schnitteinrichtung zugeführt werden. Nach dem Zuschneiden auf eine geeignete Länge müssen die Bündel an Carbonfasern aufgeschlossen werden, indem die Fasern in den Bündelabschnitten weitgehend vereinzelt werden. Vor dem Zuführen in die Florbildemaschine müssen die Fasern zudem auch noch geeignet angehäuft und in einer dosierten Art und Weise dem Florbildungsprozess zugegeben werden. Erst nach diesem Schritt können die Fasern zu einem Flor verarbeitet werden.

All diese Verarbeitungsschritte sind jedoch nicht nur relativ kostenintensiv, sondern bedeuten auch einen höheren Wartungsaufwand der Vorrichtungen des gesamten Prozessablaufs. Gerade aber bei der Verarbeitung von Faserabfällen bzw. recycelten Fasern wird die Aufbereitung besonders aufwendig, da mehrere Verarbeitungsschritte zum Aufschließen, Öffnen und mitunter auch säubern der Fasern noch zusätzlich erforderlich werden, um eine weitgehend vereinzelte Faser zu erhalten.

Weiterhin werden mit den aus dem Stand der Technik bekannten Verfahren in erster Linie Florschichten erzeugt, welche eine ungeordnete und höchstens nur teilweise orientierte Faserstruktur aufweisen. Zwar ist es grundsätzlich möglich, die Fasern in dem Flor durch einen Kämmschritt nachträglich noch auszurichten, jedoch erfordert dies wiederum einen weiteren Prozessschritt, welcher einerseits Kosten verursacht, andererseits ist ein Kämmschritt besonders schonend anzuwenden, um die Florschicht nicht weiter zu beschädigen.

Die Ausrichtung von Fasern ist für vorbestimmte Anwendungen jedoch oftmals erwünscht, da dadurch eine oder mehrere mechanische Vorzugsrichtung/en in der Florschicht definiert werden kann/können. Somit kann etwa ein Vliesstoff mit definierten Vorzugsrichtungen zu einem faserorientierten Faserverbundwerkstoff weiter verarbeitet und belastungsgerecht in Anwendungen eingesetzt werden. Die Faserverbundwerkstoffe werden hierbei derart eingesetzt, dass die Vorzugsrichtung/en der Florschicht in Richtung der aufzunehmenden mechanischen Kräfte orientiert ist/sind, um diese vorteilhaft aufzunehmen. Hierbei sind die Kräfte bevorzugt in die Längsrichtung der Fasern gerichtet. Dies ist insbesondere bei Carbonfasern der Fall, die in Faserlängsrichtung besonders zugfest sind.

Aufgabe der vorliegenden Erfindung ist es nun, eine Florschicht vorzuschlagen, welche kostengünstiger herzustellen ist im Vergleich zu den Florschichten, die aus dem Stand der Technik bekannt sind. Insbesondere sollen zur Herstellung einer Florschicht weniger Arbeitsschritte erforderlich sein. Dies betrifft erfindungsgemäß Carbonfaserflorschichten, welche nach dem Stand der Technik noch aus Einzelfasern, die einem Tow oder Roving entnommen sind, hergestellt werden. Solche Florschichten sollen zudem eine geeignete Orientierung der Fasern aufweisen, so dass die Florschicht eine, bevorzugt zwei oder mehr Vorzugsrichtungen aufweisen kann. Die Vorzugsrichtung/en soll/en insbesondere erlauben, dass ein Faserverbundwerkstoff, in welchem die Florschicht zur Verstärkung vorgesehen ist, ebenfalls in Richtung der Vorzugsrichtung/en relativ besser belastbar ist. Das Vorsehen der Vorzugsrichtung/en betrifft erfindungsgemäß zunächst eine Florschicht, welche mittels einer Florbildemaschine erzeugt wird. Dem steht jedoch nicht entgegen, dass auch ein Vlies oder ein Vliesstoff aus mehreren solchen erfindungsgemäßen Florschichten ausgebildet sein kann, welcher wenigstens eine Vorzugsrichtung, bevorzugt mehrere Vorzugsrichtungen aufweisen kann.

Weiter ist es Aufgabe der vorliegenden Erfindung, ein Herstellungsverfahren für eine solche Florschicht vorzuschlagen, welches relativ weniger Kosten verursacht und zudem weniger technische Aufwendungen für die Aufbereitung der Carbonfasern erfordert.

Erfindungsgemäß wird diese Aufgabe mit einer Florschicht gemäß Anspruch 1 gelöst, sowie durch ein Herstellungsverfahren nach Anspruch 12. Weiter wird die der Erfindung zugrunde liegende Aufgabe durch eine Vlies oder einen Vliesstoff nach Anspruch 10 gelöst.

Insbesondere wird die der Erfindung zugrunde liegende Aufgabe durch eine Florschicht gelöst, welche eine Mehrzahl an Carbonfasern umfassende Bündel aufweist, wobei wenigstens einige der Bündel einen gekrümmten Verlauf haben, der einen gekrümmten Scheitelbereich einer ersten Krümmung (K1) zwischen den Bündelenden und wenigstens einen, an den Bündelenden angeordneten Bündelendbereich einer zweiten Krümmung (K2) aufweist, wobei die erste Krümmung (K1) größer ist als die zweite Krümmung (K2), insbesondere um wenigstens 50% größer ist.

Hierbei sollen die möglichen Vorzeichen der Krümmungen der Bündel unberücksichtigt bleiben. Die Krümmungen beziehen sich lediglich auf die Krümmungsbeträge.

Erfindungsgemäß kann jedes der Bündel mit einem gekrümmten Verlauf eine individuelle erste Krümmung (K1) bzw. eine individuelle zweite Krümmung (K2) aufweisen. Es ist jedoch auch im Sinne der Erfindung möglich, dass eine Mehrzahl an Bündel mit einem gekrümmten Verlauf eine im Rahmen der Messgenauigkeit einheitliche erste Krümmung (K1) bzw. zweite Krümmung (K2) aufweist. Wesentlich ist jedoch in jedem Fall, dass ein Bündel einen gekrümmten Verlauf aufweist, welcher im Scheitelbereich des Bündels eine erste Krümmung (K1) aufweist und an einem Bündelendbereich des selben Bündels eine zweite Krümmung (K2), welche kleiner ist als die erste Krümmung (K1). Ebenso ist es möglich, dass beide Bündelendbereiche eine jeweils individuelle zweite Krümmung (K2) bzw. auch eine betragsmäßig gleiche zweite Krümmung (K2) aufweisen.

Der Scheitelbereich ist hierbei als der Bereich des Bündels zu verstehen, welcher die größte Krümmung aufweist. Der Begriff des Scheitelbereichs wird weiterhin durch die nachfolgend noch aufgeführten Ausführungsbeispiele erläutert. Der erfindungsgemäße Scheitelbereich umfasst insbesondere den Punkt des Verlaufs, welcher die größte Krümmung aufweist. Im Gegensatz hierzu umfasst der Bündelendbereich insbesondere den Punkt des jeweiligen Bündelendes.

Die Krümmung eines Bündel wird im Rahmen der vorliegenden Erfindung aus dem gemittelten Richtungsverlauf aller Fasern in dem Bündel bestimmt. Die Fasern eines Bündels werden zu dieser Bestimmung hinsichtlich ihrer individuellen räumlichen Lage erfasst, wobei die mittlere Lage aus vergleichbaren Abschnitten einzelner Fasern in dem Bündel berechnet wird. So ist der mittlere Verlauf insbesondere in Bereichen, in welchen die Fasern der Bündel über einen kreisförmigen Querschnitt dicht liegen, im Wesentlichen mit dem derjenigen Faser überein stimmend, welche in der Mitte des Bündels bezogen auf den Querschnitt angeordnet ist. Sind die Fasern jedoch aufgefächert, wie dies typischerweise eher an den Bündelenden der Fall sein wird, wird der mittlere Verlauf des Bündels aus einer Mittelung der Lagen aller vergleichbarer Abschnitte der einzelnen Fasern zu ermitteln sein. Die Mittelwertbildung zur Bestimmung des mittleren Verlaufs ist dem Fachmann mittels gängiger Überlegungen möglich.

Der gekrümmte Verlauf eines Bündels weist typischerweise an unterschiedlichen Stellen des Bündels auch unterschiedliche Krümmungen auf. Um eine Krümmung zu bestimmen, wird einem vorbestimmten Bereich des Verlaufs ein Kreis derart einbeschrieben, dass die Umfangslinie des einbeschriebenen Kreises an der entsprechenden Stelle mit dem Verlauf des Bündels tangential überein stimmt. Insofern weist ein dem Scheitelbereich einbeschriebener Kreis einen kleineren Radius mit einer größeren erste Krümmung (K1) auf, als ein dem Bündelendbereich einbeschriebener zweiter Kreis mit einer relativ größeren Radius aber mit einer kleineren zweiten Krümmung (K2).

Weiter wird die Erfindung insbesondere durch ein Verfahren zur Herstellung einer Florschicht gelöst, umfassend folgende Schritte: Einbringen von Carbonfasern umfassende Bündel in eine Krempelvorrichtung; Betreiben der Krempelvorrichtung in der Art, dass die Bündel nicht vollständig in Carbonfasern zu Einzelfasern vereinzelt werden, jedoch Carbonfasern der Bündel mit weiteren Fasern miteinander verschlungen werden; Abnehmen der Florschicht aus der Krempelvorrichtung;

Der Krempelprozess ist hierbei so einzustellen, dass eine Auflösung der in die Krempelvorrichtung eingebrachten Bündel in Einzelfasern nicht erfolgt. Hierbei ist jedoch nicht ausgeschlossen, dass in die Kremperlvorrichtung auch Einzelfasern neben Bündeln eingebracht werden. Die Bündel können beim Einbringen vereinzelbar vorliegen oder aber mit den Carbonfasern und/oder mit anderen Fasern bereits verschlungen. Insbesondere können die Bündel in einem unverfestigten bzw. nicht weiter bearbeiteten Fasergewirr vorliegen, in welchem die Fasern teilweise vereinzelt aus einem Bündel hervor stehen und mit anderen Fasern verschlungen vorliegen.

Um eine vollständige Auflösung der Bündel in der Krempelvorrichtung zu vermeiden, kann etwa die Anzahl der Wende- und Arbeitsschritte angepasst werden, bzw. der Abstand der von der Krempelvorrichtung umfassten Walzen zueinander. Weiter kann auch die Oberfläche der einzelnen Walzen geeignet angepasst werden, um eine vollständige Aufschließung der Bündel in Einzelfasern zu vermeiden. Denkbar ist auch eine geometrische Anpassung der von den Walzen der Krempelvorrichtung umfassten Garnitur.

Ein Bündel ist in diesem Zusammenhang, wie auch im Rahmen der vorliegenden Patentanmeldung als Ansammlung von Fasern zu verstehen, welche wenigstens teilweise einen im Wesentlichen parallelen Richtungsverlauf haben, wobei die Faserdichte in dem Bündel wenigstens teilweise im Vergleich zu der Faserdichte der Zumgebung erhöht ist. Insofern können Bündel auch sehr gut optisch identifiziert werden, da sie sich von ihrer Umgebung absetzen und sich als Bündel in den meisten Fällen optisch gut identifizieren lassen. Ein Bündel kann zudem auch einen Zusammenhalt der einzelnen Fasern aufweisen, welcher das Bündel während mechanischer Beanspruchung vor einem Auseinanderfallen in Einzelfasern bewahrt.

Vorteilhaft an der erfindungsgemäßen Florschicht ist, dass die Bündel von der Florschicht zwar mit umfasst sind, die Fasern jedoch nicht in Einzelfasern aufgelöst sind. Damit wird der Florschicht eine besondere Festigkeit verliehen, insbesondere in Richtung einer mechanischen Beanspruchung, welche in Längsrichtung der Fasern an den Bündeln angreift. So können die Bündel in Richtung ihres Faserverlaufs äußere Krafteinwirkungen, welche etwa auf den später herzustellenden Faserverbundwerkstoff einwirken und in die Bündel eingeleitet werden, wesentlich besser aufnehmen ohne zu versagen als im Vergleich zu vereinzelten und nicht weiter zueinander ausgerichteten Fasern.

Aufgrund des gekrümmten Verlaufs weisen die Bündel zudem nicht nur eine Vorzugsrichtung auf, etwa in Richtung des Faserverlaufs an den Bündelendbereichen, sondern auch etwa in einer Richtung tangential zum Scheitelbereich. Der gekrümmte Verlauf sorgt also dafür, dass die Bündel nicht nur eine Vorzugsrichtung hinsichtlich der Kraftaufnahme aufweisen, sondern auch noch eine andere davon abweichende Vorzugsrichtungen. Dies erlaubt etwa eine Florschicht herzustellen, welche wenigstens eine Vorzugsrichtung, insbesondere aber wenigstens zwei Vorzugsrichtungen aufweist. Weitere Erklärungen hierzu können auch aus den nachfolgenden Figurenbeschreibungen entnommen werden.

Durch den Umstand, dass bei der Herstellung der Florschicht, die in die Krempelvorrichtung eingeführten Fasern nicht zu Einzelfasern vollständig aufgeschlossen werden, wobei sie jedoch in der Florschicht durch ein gerichtetes Krempeln bewegt wehrden, erfolgt eine Umorientierung der einzelnen Bündel in der Florschicht. Der Krempelvorgang ordnet hierbei die Bündel derart an, dass sie einen gekrümmten Verlauf aufweisen. Während des Vorgangs des Krempelns werden die einzelnen Bündel von den Zähnen der Garnitur der einzelnen Walzen in der Krempelvorrichtung erfasst und gegen die umgebenden Fasern der in der Krempel erzeugten Florschicht bewegt. Die dabei auftretenden Scherkräfte bewirken eine Krümmung der Bündel gegen die Fasern ihrer Umgebung. Der gekrümmte Verlauf weist hierbei wenigstens zwei Bereiche mit unterschiedlicher Krümmung auf. Zusätzlich werden durch den Krempelprozess die Bündel teilweise ausgeschlossen, wobei einzelne Fasern teilweise mit vereinzelten Fasern in der Florschicht aber auch mit den Fasern in den Bündeln verschlungen werden.

Eine besonders vorteilhafte Ausführungsform der erfindungsgemäßen Florschicht zeichnet sich dadurch aus, dass die Orientierung einer Mehrheit der gekrümmt verlaufenden Bündel im Wesentlichen gleich ist, also etwa der Verlauf wenigstens eines der Bündelendbereiche eines gekrümmt verlaufenden Bündels im Vergleich zu anderen Bündelendbereichen anderer gekrümmt verlaufender Bündel einen im Wesentlichen gleichorientierten Verlauf aufweiset. Hierbei wird wiederum auf den mittleren Verlauf aller von einem Bündel umfassten Fasern Bezug genommen.

Eine Gleichorientierung ist insbesondere dann erreicht, wenn der mittlere Richtungsverlauf eines der Bündelenden nicht mehr als 10° von dem Richtungsverlauf eines Bündelendes eines anderen Bündels abweicht. Bevorzugt weisen auch Schnittlinien, die senkrecht zum Richtungsverlauf der Bündel in deren Scheitelpunkte mit der größten Krümmung verlaufen, eine im Wesentlichen gleiche Richtung auf und können zur Definition einer Orientierung herangezogen werden. Auch hier ist eine im Wesentlichen gleiche Orientierung erreicht, soweit sich die Richtungen dieser Schnittlinien nicht um mehr als 10° unterscheiden. In Bezug auf die möglichen Definitionen der Orientierung sei unterstützende auch auf die Erklärungen im Figurenteil hingewiesen.

Bei einer solchen ausführungsgemäßen Florschicht ist es vorteilhaft, dass die Mehrheit der gleichorientierten Bündel die festigkeitsverstärkende Wirkung der Florschicht, welche sie einem später herzustellenden Faserverbundwerkstoff zur Verfügung stellen kann, im Vergleich zu einer weniger stark orientierten Florschicht verbessert. Durch die Orientierung der Bündel wird vor allem eine Kraftaufnahme in eine Richtung im Wesentlichen parallel zu dem Richtungsverlauf der Bündelendbereiche verbessert. Zudem wird auch die Stabilität in einer dazu senkrecht verlaufenden Richtung verbessert, da dies im Wesentlichen der Richtung des gemittelten Faserverlaufs im Scheitelbereich entspricht. Insbesondere ist dies zutreffend für den mittleren Verlauf des Bündels in dem Bereich, welcher mit der größten Krümmung in dem Scheitelbereich überein stimmt. Dieser Bereich weist zwar eine Krümmung auf, jedoch erhöht die dort typischerweise erhöht vorliegende Faserdichte auch die Festigkeit in eine tangentiale Richtung zu dem Bündelverlauf.

Ausführungsgemäß kann auch vorgesehen sein, dass die beiden Bündelenden von gekrümmt verlaufenden Bündeln jeweils einen Bündelendbereich mit einer zweiten Krümmung (K2) aufweisen, wobei insbesondere die beiden zweiten Krümmungen (K2) kleiner sind als die erste Krümmung (K1), bevorzugt um wenigstens 50% kleiner sind. Insbesondere dann, wenn die beiden zweiten Krümmungen (K2) im Wesentlichen gleich Null sind, wird die orientierungsverstärkende Wirkung der Bündel noch weiter verbessert: Dies kann auch, jedoch typischerweise zu einem geringeren Grad, durch zweite Krümmungen (K2) erreicht werden, die nicht im Wesentlichen Null sind. Im Wesentlichen Null soll hier so verstanden werden, dass die zweite Krümmung (K2) wenigstens um einen Faktor 20 geringer ist als die erste Krümmung (K1).

Ausführungsgemäß ist es auch denkbar, dass die erste Krümmung (K1) größer ist als der reziproke Wert der durchschnittlichen Länge des jeweiligen Bündels. Dies gewährleistet eine besonders geeignete Krümmung des Scheitelbereiches, welche insbesondere größer ist als eine Krümmung, die ein Kreis aufweist, dessen Umfangslinie der Länge des Bündels entspricht.

Gemäß einer vorteilhaften Ausführungsform der Erfindung kann auch vorgesehen sein, dass wenigstens 50%, bevorzugt wenigstens 90%, besonders bevorzugt wenigstens 98% aller Bündel in der Florschicht einen gekrümmten Verlauf aufweisen. Mit zunehmendem Ausrichtungsgrad kann so eine zunehmend verbesserte Festigkeit des nachfolgend herzustellenden Faserverbundwerkstoffes erreicht werden, welcher eine ausführungsgemäße Florschicht umfasst.

Entsprechend einer weiteren Ausführungsform kann auch vorgesehen sein, dass der kürzeste Abstand zwischen den beiden Bündelenden eines der gekrümmt verlaufenden Bündel geringer ist als der größte Abstand zwischen dem Scheitelbereich und einem der beiden Bündelenden. Die Bündelenden weisen somit eine ausreichend Länge auf, um der Florschicht einen geeignete Festigkeit zu verleihen, wobei diese auch zu einer verbesserten Festigkeit des nachfolgend herzustellenden Faserverbundwerkstoffes beitragen kann.

So ist es vor allem ausführungsgemäß wünschenswert, dass die Bündelenden einen weitgehend parallelen Verlauf zueinander aufweisen, um somit die festigkeitsverbessemde Wirkung noch zu verbessern. Denn gerade, wenn die Bündelenden eine vergleichbare Orientierung aufweisen, weisen verhältnismäßig mehr Fasern in eine Richtung der Florschicht und erlauben somit eine vorteilhafte Festigkeitsverbesserung. Ein im Wesentlichen paralleler Verlauf liegt dann vor, wenn der lineare Richtungsverlauf der Bündelendbereiche um höchstens 20° voneinander abweichen.

Entsprechend einer besonders vorteilhaften Ausführungsform kann auch vorgesehen sein, dass die zweite Krümmung (K2) im Wesentlichen 0 ist. Im Wesentlichen 0 soll hier in dem Sinne verstanden werden, dass sich die zweite Krümmung (K2) von der ersten Krümmung (K1) um mindestens den Faktor 20 unterscheidet, also größer ist als eine Krümmung, welche sich berechnet nach dem 20fachen Betrag der ersten Krümmung (K1). Eine derart geringe zweite Krümmung (K2) gewährleistet einen guten, im Wesentlichen geradlinigen Verlauf der Bündelenden und ermöglicht, der Florschicht eine geeignete Festigkeit zu verleihen, wobei diese auch zu einer verbesserten Festigkeit des nachfolgend herzustellenden Faserverbundwerkstoffes beiträgt.

Ausführungsgemäß kann auch vorgesehen sein, dass nicht weniger als 3 Bündel in einem Flächenabschnitt von 4 cm² vorgesehen sind. Dies verleiht der Florschicht eine vorteilhafte Festigkeit, welche auch zu einer verbesserten Festigkeit des nachfolgend herzustellenden Faserverbundwerkstoffes beitragen kann. Insbesondere da die gekrümmt verlaufenden Bündel für eine gerichtete Kraftaufnahme besonders geeignet sind, kann somit die gerichtete Kraftaufnahme in dem nachfolgend herzustellenden Faserverbundwerkstoffverbessert erfolgen.

Entsprechend einer weiteren Ausführungsform der vorliegenden Erfindung kann auch vorgesehen sein, dass die Mehrzahl an Carbonfasern umfassende Bündel nicht länger als 15 cm, und insbesondere nicht länger als 10 cm sind. Mit zunehmend kürzerer Länge kann der relative Bündelgehalt in der Florschicht bei gleichbleibendem Fasergehalt verbessert werden. Hierbei kann es jedoch je nach Anforderungen auch erforderlich sein, dass die Bündel Abschnitte aufweisen, welche eine geeignete Orientierung in vorzugsweise eine vorbestimmte Richtung aufweisen, um eine richtungsspezifische Festigkeitsverbesserung zu erreichen. Dies erfordert jedoch auch, dass die gekrümmt verlaufenden Bündel eine Mindestlänge nicht unterschreiten, da sonst die festigkeitsverbessernde Wirkung nicht ausreichend ist. So kann es also entsprechend einer weiter gehenden Ausführungsform vorteilhaft sein, dass die gekrümmt verlaufenden Bündel eine untere Länge von etwa 2 cm nicht weiter unterschreiten.

Ausführungsgemäß ist es auch möglich, dass ein Anteil von höchstens 5% aller von einer Florschicht umfassten Fasern eine Länge aufweist, welche größer als 15 cm ist. So ist es insbesondere mitunter auch wünschenswert, dass die Fasern eine Verteilung aufweisen, welche auch eine Anzahl an Fasern umfasst, die länger als 15 cm sind, da so auch Recyclingverfahren zur Fasergewinnung und Faserbereitstellung dienen können, die keine universale Verkürzung der Fasern auf unter 15 cm gewährleisten können.

Ausführungsgemäß kann es auch vorgesehen sein, däss die mittleren Bündellängen der gekrümmt verlaufenden Bündel in der Florschicht bevorzugt um wenigstens 100%, oder sogar um mehr als 200% variieren. Denkbar sind auch Ausführungsformen, bei welchen die mittleren Bündellängen um wenigstens 500% variieren. Beide Ausführungsformen betreffen insbesondere die Mehrzahl an den gekrümmt verlaufenden Bündeln in der Florschicht. Eine Variation der Bündellänge erlaubt so etwa auch, Bündel in einer Florschicht vorzusehen, welche vor Einführen in die Krempel nicht weiter einer Größenselektion unterworfen wurden. So können etwa auch Bündel, welche einem nicht weiter größenselektionierendem Recyclingprozess entstammen, zu einer ausführungemäßen Florschicht verarbeitet werden. Derartige Recyclingprozesse vermögen etwa, Carbonfasergelege aufzuarbeiten, wobei jedoch keine Größenselektion statt findet. So können etwa Carbonfasergelege ungeordnet zerschnitten werden, so dass zwar einerseits eine Maximallänge gewährleistet werden kann, jedoch die Faserlängenverteilung bzw. Bündellängenverteilung zur Verringerung des Herstellungsaufwandes nicht weiter eingestellt wird.

Entsprechend einer weiteren Ausführungsform kann auch vorgesehen sein, dass die gekrümmt verlaufenden Bündel eine Vielzahl an Carbonfasern aufweisen, welche aus dem Bündel heraus ragen und mit anderen Fasern, die nicht von dem Bündel umfasst sind, zu einem Flor verschlungen sind. Dies erhöht einerseits die Verankerung der Bündel in der Florschicht, andererseits jedoch auch den Fasergehalt der Florschicht in der Umgebung der gekrümmt verlaufenden Bündel. Damit kann in vorteilhafter Weise die Festigkeit der Florschicht und des nachfolgend daraus hergestellten Faserverbundwerkstoffes verbessert werden.

Entsprechend einer weiteren Ausführungsform der Erfindung kann auch vorgesehen sein, dass aus dem Bündel heraus ragende Carbonfasern eine Länge aufweisen, welche höchstens 50% der Bündellänge ist. Damit wird gewährleistet, dass die Fasern eine noch ausreichende Verankerung in den gekrümmt verlaufenden Bündeln erfahren.

Entsprechend einer weiteren Ausführungsform kann auch vorgesehen sein, dass die Florschicht Carbonfasern aufweist, welche nicht von einem gekrümmt verlaufenden Bündel umfasst sind, und welche eine Länge aufweisen, welche nicht länger ist als 1 cm, insbesondere nicht länger als 0,5 cm sind. Dementsprechend umfasst die Florschicht auch relativ kurze Stapelfasern, welche deutlich kürzer sein können, als die Mehrheit der von der Florschicht umfassten Bündel. Entsprechend dieser Ausführungsform kann auch vorgesehen sein, dass die Fasern aus einem Recyclingprozess entnommen sind, welcher die Fasern bzw. die Bündel nicht hinsichtlich Ihrer Faserlänge aufbereitet. So können auch Recyclingprozesse zur Aufbereitung der Fasern eingesetzt werden, welche relativ kurze Fasern erzeugen, also ein zu verarbeitendes Textil nicht sonderlich schonend aufbereiten. Dennoch muss die Aufbereitung gewährleisten, dass die von dem Textil umfassten Bündel nicht vollständig aufgeschlossen werden, also in Einzelfasern getrennt werden. Dies kann etwa durch eine geeignete Behandlungsdauer bzw. eine geeignet eingestellt Behandlungsintensität erreicht werden.

Gemäß einer bevorzugten Ausführungsform kann auch vorgesehen sein, dass eine Anzahl an gekrümmt verlaufenden Bündeln wenigstens 200, bevorzugt wenigstens 500 und besonders bevorzugt wenigstens 1000 Carbonfasern umfassen. Die ausführungsgemäße Anzahl betrifft insbesondere eine Mehrzahl der gekrümmt verlaufenden Bündel in der Florschicht. Somit kann die richtungsabhängige Festigkeit der Florschicht geeignet eingestellt werden, um etwa dem nachfolgen herzustellenden Faserverbundwerkstoff eine vorbestimmte richtungsabhängige Festigkeit zu verleihen. Weiter können so auch Carbonfasertextilien aus einem Recyclingprozess verwendet werden, welche typischerweise Stränge von 2000 und mehr Fasern pro Strang aufweisen. Durch einen geeigneten Aufarbeitungsprozess werden die von einem wiederzuverwendenden Textil umfassten Bündel derart aufbereitet, dass die Stränge bis zu einer Mindestfaserzahl aufgeschlossen werden. Durch die anschließende Verarbeitung in einer Krempel können die Bündel teilweise noch weiter aufgeschlossen werden, jedoch nicht stärker, als dass eine ausführungsgemäße Faserzahl in der Florschicht zurück bleibt.

Gemäß einer besonders bevorzugten Ausführungsform kann vorgesehen sein, dass die Florschicht eine Flächenmasse (Flächengewicht) von höchstens 50 g/m² und nicht weniger als 10 g/m², bevorzugt zwischen 35 g/m² und 25 g/m² aufweist. Derartige Florschichten sind insbesondere in der Automobilindustrie besonders begehrt, da sie eine ausreichende Festigkeit in dem nachfolgend herzustellenden Faserverbundwerkstoff aufweisen, jedoch das Gewicht des Bauteils sehr stark reduzieren zu erlauben. Insbesondere ermöglichen die ausführungsgemäßen Flächenmassen eine effiziente Verwendung des wertvollen Rohmaterials Carbonfasern bei gleichzeitiger Gewährleistung der Erfüllung der Mindestanforderungen an die Festigkeit. Das Verhältnis aus erforderter Festigkeit zu dem vorliegenden Gewicht ist also besonders vorteilhaft.

Die der vorliegenden Erfindung zugrunde liegende Aufgabe wird auch ausführungsgemäß durch ein Vlies bzw. einen Vliesstoff gelöst, welcher wenigstens zwei Florschichten gemäß einer der oben oder auch nachfolgend beschriebenen Ausführungsformen der Florschicht aufweist, und welche insbesondere miteinander vernadelt sind. Durch die Verarbeitung von wenigstens zwei Florschichten zu einem Vlies oder einem Vliesstoff können die festigkeitssteigernden Eigenschaften der Florschichten nochmals verbessert werden. Insbesondere können die Richtungs- bzw. Orientierungsvorzüge durch geeignete Orientierung der wenigstens zwei Florschichten in Bezug aufeinander angepasst werden. So ist es etwa möglich, dass die eine Florschicht mit einer ersten Orientierung in dem Vlies oder dem Vliesstoff angeordnet wird, wobei jedoch die zweite Florschicht in Bezug auf eine weitere zweite Orientierung, die sich von der ersten Orientierung unterscheidet, angeordnet ist. Die erlaubt, innerhalb eines Vlieses bzw. einer Vliesstoffschicht mehrere Vorzugsrichtungen zu definieren. Hierbei können die gekrümmt verlaufenden Bündel durch eine Vernadelung der wenigstens zwei Florschichten in Bezug zueinander fixiert werden. Ein Aufschließen der Bündel in Einzelfasern durch Vernadeln soll im Rahmen der vorliegenden Erfindung ausgeschlossen sein.

Gemäß einer weiteren bevorzugten Ausführungsform des Vliesstoffes kann auch vorgesehen sein, dass er eine Florschicht gemäß den vorher beschriebenen Ausführungsformen aufweist, welche zur Verfestigung vernadelt ist. Eine Vernadelung bewirkt eine weitere Verschlingung der von der Florschicht umfassten Fasern, insbesondere eine Verschlingung, welche lokal erfolgt und somit eine lokale Verfestigung bewirkt. Ist die Florschicht durch eine ausreichende Anzahl ausreichend dichter Nadelstiche vernadelt, kann dem gesamten Gebilde der Florschicht eine deutlich verbesserte Festigkeit verliehen werden.

Entsprechend einer weiteren Ausführungsform eines Vlieses oder eines Vliesstoffes kann auch vorgesehen sein, dass die Orientierung der gekrümmt verlaufenden Bündel in einer Florschicht im Vergleich zu der Orientierung der gekrümmt verlaufenden Bündel in einer anderen Florschicht voneinander um wenigstens 5° abweicht, sich insbesondere um einen Winkelbetrag von 15°, 30°, 45°, 60°, 75° oder 90° unterscheidet. Dies ermöglicht insbesondere auf einfache Art und Weise, bevorzugte Vorzugsrichtungen innerhalb des Vlieses oder des Vliesstoffes mit einer definierten Winkelabweichung auszubilden. Dies zeigt sich im Rahmen der Verarbeitung im automobilen Fahrzeugbau von großem Vorteil, da die Vorzugsrichtungen in geeigneter Weise relativ zu den Anwendungen abgestimmt werden können.

Gemäß eine weiteren Ausführungsform der Erfindung kann auch vorgesehen sein, dass wenigstens zwei Florschichten miteinander bzw. eine Florschicht zur Verfestigung vernadelt sind/ist, wobei im Mittel wenigstens 1 Vernadelungseinstich, bevorzugt wenigstens 5 Vernadelungseinstiche auf einer Fläche von 1 cm² vorliegen. Die bezeichnete Fläche bezieht sich auf die durch Vernadelung bearbeitete Fläche der Florschicht bzw. der Florschichten, welche bevorzugt die gesamte Fläche der Florschicht bzw. der Florschichen darstellt. Durch das Einfügen der Vernadelungseinstiche wird die Florschicht bzw. werden die Florschichten einerseits verfestigt, um deren Handhabbarkeit zu verbessern. Hierbei bewirkt die Vernadelung, wie weiter oben schon ausgeführt, eine vor allem lokale Verfestigung. Aufgrund der gewählten Dichte der Vernadelungseinstiche ist ausführungsgemäß gewährleistet, dass die Anzahl der lokalen Verfestigungen ausreichend groß ist, um eine über die gesamte ausgewählte Fläche der Florschicht(en) sich erstreckende Verfestigung zu bewirken. Dies ist insbesondere dann möglich, wenn bei einer gleichmäßigen Unterteilung der Florschicht bzw. der Florschichten in Untereinheiten von jeweils 1 cm², jede Untereinheit die ausführungsgemäße Anzahl an Vernadelungseinstiche aufweist. Weiter stellen die Vernadelungseinstiche eine ausreichende Anzahl an Öffnungen in der Florschicht bzw. in den Florschichten bereit, um als Fließkanäle für eine effizientere Imprägnierung mit einem flüssigen Harz bzw. einem Polymer zu dienen. Die Öffnungen erlauben nämlich eine effiziente Weiterleitung des Harzes bzw. Polymers über die gesamte Vernadelungsdicke und damit ausführungsgemäß über die gesamte Dicke der Florschicht(en). Damit verringert sich einerseits die Imprägnierungszeit und damit auch die Herstellungszeit von Bauteilen, von welchen die Florschicht(en) umfasst sind.

Nach einem weiterführenden Aspekt der Lösung der Erfindungsaufgabe kann auch vorgesehen sein, dass ein harzimprägniertes Bauteil eine vorab beschriebene Florschicht bzw. ein vorab beschriebenes Vlies oder einen vorab beschriebenen Vliesstoff aufweist, welches Bauteil insbesondere als ein Bauteil eines Fahrzeugs ausgeformt ist. Derartige Bauteile können die beschriebenen Florschichten, Vliese bzw. Vliesstoffe alleine oder in Verbindung mit anderen textilen Strukturen aufweisen. Insbesondere ist es möglich, dass die beschriebenen Florschichten, Vliese bzw. Vliesstoffe in Verbindung mit einem Gelege und/oder einem Gewebe von dem Bauteil umfasst sind, wobei das Gelege und/oder Gewebe in erster Linie zur Lastaufnahme vorgesehen ist. Weiter ist es auch möglich, dass die Bauteile eines Fahrzeugs, welche die beschriebenen Florschichten, Vliese bzw. Vliesstoffe aufweisen, nicht zur Gewährleistung der passiven Sicherheit eines Fahrzeugs vorgesehen sind. Insbesondere sind diese Bauteile bevorzugt als Teile der Außenhülle eines Fahrzeugs ausgebildet. Das Bauteil kann harzimprägniert sein, wobei eine vollständige Imprägnierung oder auch eine nur teilweise Imprägnierung erreicht sein kann. Weiter kann das harzimprägnierte Bauteil ausgehärtet sein. Unter die ausführungsgemäße Harzimprägnierung ist auch eine geeignete Polymerimprägnierung zu rechnen.

Nachfolgend soll anhand verschiedener Ausführungsformen der Florschicht, des Vlieses bzw. Vliesstoffes und des Herstellungsverfahrens zur Herstellung einer erfindungsgemäßen Florschicht die Erfindung im Detail anhand von Figuren erklärt werden. Die dargestellten Ausführungsformen stellen hinsichtlich der Allgemeinheit der beanspruchten Erfindung keine Einschränkung dar. Insbesondere werden die nachfolgend beanspruchten Merkmale in Alleinstellung wie auch in Zusammensicht mit den vorab beschriebenen Merkmalen jeweils beansprucht. Folglich wird vorliegend jede technisch mögliche sowie in Sinne der vorliegenden Erfindung geeignete Kombination an Merkmalen beansprucht.

Weitere Ausführungsformen ergeben sich aus den Unteransprüchen.

Hierbei zeigen:
- Fig. 1: eine erste Ausführungsform einer erfindungsgemäßen Florschicht in Aufsicht;
- Fig. 2: eine zweite Ausführungsform einer erfindungsgemäßen Florschicht in Aufsicht;
- Fig. 3: eine erste Ausführungsform eines erfindungsgemäßen Vliesstoffes in Aufsicht;
- Fig. 4: ein Bündel mit einem gekrümmten Verlauf, wie es etwa von einer der Ausführungsformen der vorher beschriebenen Florschichten bzw. Vliesstoffe umfasst sein kann;
- Fig. 5: ein Flussdiagramm zur Darstellung des Ablaufes einzelner Schritte, die von einer Ausführungsform des erfindungsgemäßen Herstellungsverfahrens umfasst sind.

An dieser Stelle sei der Vollständigkeit halber auch darauf hingewiesen, dass die in den Figuren gezeigten Ausführungsformen lediglich schematische Darstellungen sind. Insbesondere Größen und Proportionen können bei einem konkreten erfindungsgemäßen Gegenstand von denen der gezeigten Darstellungen abweichen.

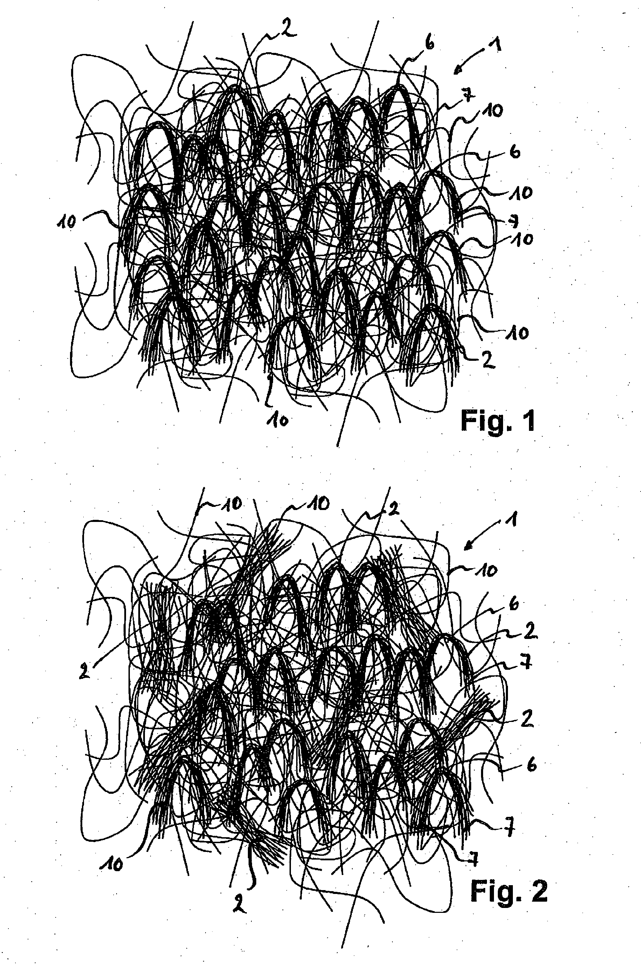

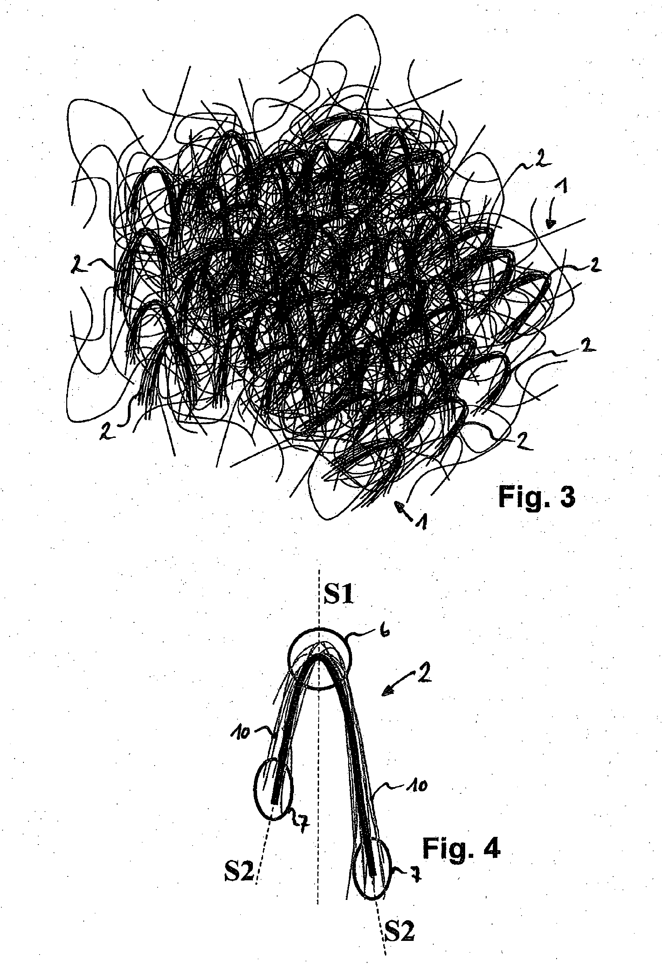

Fig. 1 zeigt eine erste Ausführungsform einer erfindungsgemäßen Florschicht 1 mit einer Mehrzahl an Carbonfasern 10 umfassenden Bündeln 2. Die Bündel 2 weisen einen Scheitelbereich 6 sowie jeweils zwei Bündelendbereiche 7 auf. Der Begriff des Scheitelbereichs 6 sowie des Bündelendbereichs 7 ist in Figur 3 in größerem Detail erläutert.

Erkennbart ist die Mehrzahl an gekrümmt verlaufenden Bündeln 2, die in der Florschicht 1 mittels vereinzelter Fasern verankert sind. Die Fasern können hierbei teilweise von der Florschicht 2 wie auch teilweise von den gekrümmt verlaufenden Bündeln 2 umfasst sein. Die Florschicht 2 ist also aus verschlungenen Fasern aufgebaut, welche entweder nicht, teilweise oder vollständig von den gekrümmt verlaufenden Bündeln 2 umfasst sind. Durch das Verschlingen der Fasern kann so eine flächige Struktur, die Florschicht 1, aufgebaut werden, welche gegen mechanische Einflüsse von außen ausreichend stabil ist, um etwa in einem nachfolgenden Behandlungsprozess weiter verarbeitet zu werden.

Ausführungsgemäß weisen die Bündel 2 jeweils einen Anteil an Carbonfasern 10 auf und können sogar entsprechend weiterer Ausführungsformen vollständig aus Carbonfasern 10 bestehen. Ebenso können die in der Florschicht 2 vereinzelten Fasern teilweise oder sogar vollständige aus Carbonfasern 10 sein. Der Anteil der Carbonfasern 10 bemisst sich hierbei insbesondere an den Festigkeitserfordernissen, welche an die Florschicht 1 zu stellen sind.

Wie leicht zu erkennen ist, weisen alle Bündel 2 eine im Wesentlichen gleichgerichtete Orientierung auf, d.h. die Scheitelbereiche 6 aller Bündel 2 weisen auf der Darstellung nach oben, wohingegen die Bündelendbereiche 7 gemäß der Darstellung nach unten bzw. schräg nach unten weisen. D.h. die Scheitelbereiche 6 weisen zu einer Seite der Florschicht 1, wohingegen die Bündelendbereiche 7 auf die entgegengesetzte Seite der Florschicht 1 weisen. Entsprechend dieser Orientierung verlaufen die Bündelendbereiche 7 der einzelnen Bündel 2 im Wesentlichen parallel zueinander bzw. sind im Wesentlichen gleichorientiert, weisen also allesamt zu einer Seite der Florschicht 1. Dadurch weist jedoch die Florschicht 1 einen hohen Anteil an Fasern, bevorzugt einen hohen Anteil an Carbonfasern 10 auf, welcher hinsichtlich seiner Faserorientierung eine Vorzugsrichtung aufweist. Die Vorzugsrichtung ist ebenfalls in Figur 3 näher erläutert, könnte aber im vorliegenden Ausführungsbeispiel als beispielsweise in der Darstellung von oben nach unten gerichtet angesehen werden.

Aufgrund der Krümmung der einzelnen Bündel 2 verläuft auch ein Anteil an Fasern, bevorzugt ein Anteil an Carbonfasern 10, im Wesentlichen senkrecht zu dieser ersten Vorzugsrichtung. So verlaufen etwa die Fasern in den Bündeln 2 im Scheitelbereich 6 der Bündel 2 wenigstens anteilig in der dargestellten Anordnung der Bündel 2 waagrecht und definieren damit eine weitere Vorzugsrichtung, welche im Wesentlichen senkrecht zu der ersten, vorab beschriebenen Vorzugsrichtung verläuft. Damit weist jedoch die Florschicht 1 wenigstens zwei voneinander unabhängige Vorzugsrichtungen auf, welche der Florschicht eine besondere Festigkeit in Richtung dieser Vorzugsrichtungen verleihen können, insbesondere wenn die Florschicht 1 in einem Faserverbundwerkstoff integriert ist.

Fig. 2 zeigt eine zweite Ausführungsform einer erfindungsgemäßen Florschicht 1, welche sich von der in Figur 1 gezeigten Ausführungsform dadurch unterscheidet, dass nicht alle der von der Florschicht 1 umfassten Bündel 2 einen erfindungsgemäßen gekrümmten Verlauf aufweisen. Vielmehr weisen vereinzelte Bündel einen nicht weiter definierten bzw. annähernd geradlinigen Verlauf auf. Insbesondere weise diese Bündel keinen Scheitelbreich 6 auf, welcher eine Krümmung aufweisen könnte, die sich von der Krümmung der Bündelendbereiche 7 im Sinne der Erfindung unterscheiden könnte.

Entsprechend der gezeigten Ausführungsform können aber von der Florschicht 1 auch solche Bündel 2 umfasst sein, welche keinen gekrümmten Verlauf aufweisen. So kann das Verhältnis von gekrümmt verlaufenden Bündeln 2 im Sinne der Erfindung zu den übrigen nicht gekrümmt verlaufenden Bündeln 2 frei bestimmt werden. Bevorzugt ist jedoch, dass die Anzahl der gekrümmt verlaufenden Bündel 2 im Vergleich zu den nicht gekrümmt verlaufenden Bündeln 2 größer ist Insbesondere ist die Anzahl der gekrümmt verlaufenden Bündel 2 im Vergleich zu den nicht gekrümmt verlaufenden Bündeln um 85%, bevorzugt um 90%, besonders bevorzugt um 98% größer.

Die nicht gekrümmt verlaufenden Bündel 2 können eine vergleichbare Zusammensetzung im Vergleich zu den gekrümmt verlaufenden Bündeln 2 aufweisen, müssen dies jedoch nicht. Insbesondere ist es möglich, dass während des Krempelns zur Erzeugung einer ausführungsgemäßen Florschicht 1 manche Bündel 2 stärker genkrümmt werden als andere. Werden einzelne Bündel 2 nicht oder nur kaum gekrümmt, ist es möglich, dass diese einen Verlauf aufweisen, welcher von einem erfindungsgemäß gekrümmten Verlauf abweicht. Ausführungsgemäß ist es also auch möglich, dass die gekrümmt verlaufenden Bündel 2, wie auch die nicht gekrümmt verlaufenden Bündel 2 aus der gleichen Faserquelle entstammen, jedoch im Rahmen der Bearbeitung durch eine Krempelvorrichtung einen unterschiedlichen Verlauf in der herzustellenden Florschicht 2 aufweisen.

Fig. 3 zeigt eine erste Ausführungsform eines erfindungsgemäßen Vlieses bzw. Vliesstoffes, welche aus zwei Lagen einer Florschicht 1 durch Doublieren hergestellt worden sind. Liegt ein Vliesstoff vor, so kann dieser durch Vernadeln der beiden Lagen der Florschichten 1 verfestigt worden sein. Ausführungsgemäß sind die beiden Florschichten 1 derart zueinander angeordnet, dass ihre jeweiligen Vorzugsrichtungen um einen bestimmten Winkel zueinander gedreht angeordnet sind. Auf diese Weise können die festigkeitssteigernden Eigenschaften, welche sich aus den Vorzugsrichtungen der einzelnen Florschichten 1 ableiten lassen, in richtungsspezifischer Weise angepasst werden. Eine relative Anordnung kann hierbei bevorzugt um einen Winkelbetrag von 15°, 30°, 45°, 60°, 75° und 90° gedreht erfolgen. Vorliegend ist die relative Anordnung der beiden Florschichten 2 um etwa 45° zueinander gedreht angeordnet.

Fig. 4 zeigt ein Bündel 2 mit einem gekrümmten Verlauf, wie es etwa von einer der Ausführungsformen der vorher Florschichten 1, Vliese bzw. Vliesstoffe umfasst sein kann. Das Bündel 2 umfasst selbst eine Anzahl an Carbonfasern 10, welche vorliegend jedoch schematisch in nur geringer Anzahl wieder gegeben sind. Weiter sind die Fasern zur besseren optischen Unterscheidung lediglich grau wieder gegeben. Vorzugsweise weisen die Bündel 2 wenigstens 200 Carbonfasern 10, insbesondere 500 Carbonfasern 10 und besonders bevorzugt wenigstens 1000 Carbonfasern 10 auf. Das Bündel 2 weist einen Scheitelbereich 6 auf, welcher zwischen den beiden Bündelenden angeordnet ist. Die beiden Bündelenden werden von einem Bündelendbereich 7 umfasst. Sowohl der Scheitelbereich 6 als auch die Bündelendbereiche 7 werden durch ein Oval in der Zeichnung schematisch veranschaulicht.

Der Verlauf des Bündels 2 ist durch eine fett gezeichnete Linie wieder gegeben. Zur Berechnung des Verlaufs werden die Ortslagen einander entsprechende Bereiche der einzelnen Fasern miteinander gemittelt, um eine mittlere Ortslage zu bestimmen.

Die genaue Berechnung hängt von der Wahl der einzelnen Faserabschnitte ab, bzw. von dem verwendeten Mittelungsverfahren. Die im Rahmen dieser Berechnungen sich ergebenden Unterschiede sind jedoch für die vorliegende Erfindung von nicht wesentlicher Bedeutung, soweit eine einheitliche Berechnungsgrundlage für alle Bündel 2 angewandt wird. Mehrer Verfahren sind möglich, wobei sie einem technisch sinnvollen Verfahren nicht zuwider laufen dürfen. Insbesondere darf der mittlere Bündelverlauf nicht einem mit dem Auge eingeschätzten ungefähren Bündelverlauf zuwider laufen.

Für die vorliegende Erfindung ist es auch nicht von wesentlicher Bedeutung, wie die Scheitelbereiche 6 und die Bündelendbereiche 7 im Einzelnen bestimmt werden; soweit diese in technisch sinnvoller Art und Weise ermittelt werden und mit der Idee der vorliegenden Erfindung nicht im Konflikt stehen. So ist es für die Ermittelung eines Scheitelbereichs 6 beispielsweise sinnvoll, einen engen Bereich um den Punkt des Bündelverlaufs zu wählen, welcher die stärkste Krümmung aufweist. Ein enger Bereich kann hierbei etwa zwischen 2% und 10% der gesamten Bündellänge umfassen. Ebenso ist es sinnvoll einen Bündelendbereich 7 zu bestimmen, welcher die jeweiligen Bündelenden mit umfasst. Der Bündelendbereich 7 kann ebenso etwa zwischen 2% und 10% der gesamten Bündellänge umfassen. Hierbei können jedoch hiervon abweichende Bestimmungen sinnvoll sein.

Um die Orientierung eines Bündels 2 zu bestimmen, lassen sich mehrere sinnvolle Bestimmungsanweisungen anwenden. So kann etwa die Orientierung eines Bündels so bestimmt werden, dass eine Schnittgerade (S1) durch den Scheitelbereich 6 gelegt wird in der Art, dass der Schnitt senkrecht zu dem Verlauf des Scheitelbereichs 6 erfolgt, wobei der Schnitt durch den Punkt des Scheitelbereichs geht, welcher die größte Krümmung aufweist. Der Verlauf der so ermittelten Schnittgeraden (S1) entspricht damit der Orientierung des Bündels 2. Der Schnittpunkt kann aber beispielsweise auch so gewählt werden, dass die Schnittgeraden (S1) das Bündel in zwei Flächenteile unterteilt. Hierbei sind die Flächenteile aus einzelnen flächigen Teilabschnitten (vorliegend nicht im Einzelnen gezeigt) aufgebaut, welche sich in Bezug zu der Schnittgeraden (S1) jeweils einander links und rechts von der Schnittgerade (S1) gegenüber liegenden. Werden nun die Teilabschnitte so gewählt, dass die sich unmittelbar einander gegenüber liegenden Teilabschnitte flächengleich sind, bzw. nicht mehr als beispielsweise 5% voneinander abweichen, kann die Schnittlinie (S1) geeignet bestimmt werden. Hierbei ist es möglich dass sich die Bestimmung des Verlaufs der Schnittlinie (S1) danach unterscheidet, welche Größe die einzelnen Teilabschnitte aufweisen. Die Wahl wird hierbei sinnvoll entsprechend der Größe des Bündels 2 vorgenommen. Alternativ zu den oben beschriebenen Verfahren kann die Orientierung auch dem linearisiertem Verlauf eines Bündelendes 7 entsprechen, wobei der Verlauf eines Bündelendes 7 durch eine lineare Regression in dem Bündelendbereich 7 bestimmt wird (siehe die beiden Geraden S2). Bevorzugt entspricht die Orientierung auch dem Verlauf einer Geraden (ungefähr entsprechend der Schnittgeraden S1), welche die beiden so bestimmten Geraden S2 in deren Schnittpunkt derart schneidet, dass der Winkelbereich zwischen den beiden so bestimmten Geraden S2 halbiert wird.

Vorzugsweise entspricht die Orientierung eines Bündels 2 dem Richtungsverlauf einer mit S1 gekennzeichneten Geraden. Die Orientierung einer derartige Bündel 2 aufweisende Florschicht 1 kann sich dann aus einer Mittelung all dieser Einzelorientierungen bestimmen.

Wie vorab schon angemerkt, ist die exakte Bestimmung der Orientierung nicht wesentlich, soweit ein sinnvolles und einheitliches Verfahren zur Ermittlung angewandt wird.

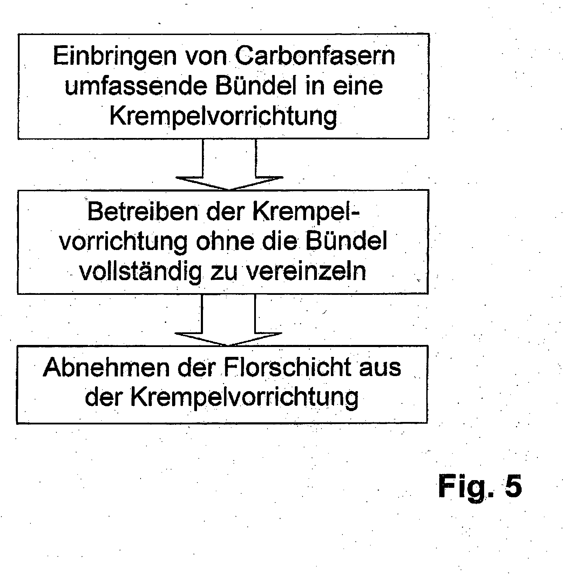

Fig. 5 betrifft ein Flussdiagramm zur Darstellung des Ablaufs einzelner Schritte, die von einer Ausführungsform des erfindungsgemäßen Verfahrens umfasst sind. Demnach ist es erforderlich, dass bei einer Ausführungsform des Verfahrens zur Herstellung einer Florschicht 1, folgende Schritte umfasst sind: Einbringen von Carbonfasern 10 umfassende Bündel 2 in eine Krempelvorrichtung; Betreiben der Krempelvorrichtung 20 in der Art, dass die Bündel 2 nicht vollständig zu Einzelfasern vereinzelt werden, jedoch Carbonfasern 10 der Bündel 2 mit weiteren Fasern 10 der Florschicht 1 miteinander verschlungen werden; Abnehmen der Florschicht 10 aus der Krempelvorrichtung;

Entsprechend einer weiter führenden Ausführungsform des Herstellungsverfahrens, können die Florschichten 1 auch noch zu Vliesen oder Vliesstoffen verarbeitet werden. Zur Verfestigung mehrerer aufeinander aufgebrachter Florschichten 1 kann ein Vernadeln bzw. ein Vernähen oder Verwirken In Erwägung gezogen werden. Hierbei sollen die von den Florschichten 1 umfassten gekrümmt verlaufenden Bündel 2 jedoch nicht oder nur teileweise beschädigt werden.

### Bezugszeichen:

- 1: Florschicht
- 2: Bündel

- 6: Scheitelbereich
- 7: Bündelendbereich

- 10: Carbonfaser

- 20: Krempelvorrichtung

- K1: ersten Krümmung
- K2: zweiten Krümmung

## Patentansprüche

1. Florschicht (1), welche eine Mehrzahl an Carbonfasern (10) umfassende Bündel (2) aufweist,
und **dadurch gekennzeichnet ist, dass**
wenigstens einige der Bündel (2) einen gekrümmten Verlauf haben, der einen gekrümmten Scheitelbereich (6) einer ersten Krümmung (K1) zwischen den Bündelenden und wenigstens einen, an den Bündelenden angeordneten Bündelendbereich (7) einer zweiten Krümmung (K2) aufweist, wobei die erste Krümmung (K1) größer ist als die zweite Krümmung (K2), insbesondere um wenigstens 50% größer ist.

2. Florschicht, nach Anspruch 1,
**dadurch gekennzeichnet, dass**
die Orientierung einer Mehrheit der gekrümmt verlaufenden Bündel (2) im Wesentlichen gleich ist, also etwa der Verlauf wenigstens eines der Bündelendbereiche (7) eines gekrümmt verlaufenden Bündels (2) im Vergleich zu anderen Bündelendbereichen (7) anderer gekrümmt verlaufender Bündel (2) einen im Wesentlichen gleichorientierten Verlauf aufweist.

3. Florschicht, nach einem der vorher gehenden Ansprüche,
**dadurch gekennzeichnet, dass**
die beiden Bündelenden von gekrümmt verlaufenden Bündeln (2) jeweils einen Bündelendbereich (7) mit einer zweiten Krümmung (K2) aufweisen, wobei insbesondere die beiden zweiten Krümmungen (K2) kleiner sind als die erste Krümmung (K1), bevorzugt um wenigstens 50% kleiner sind.

4. Florschicht, nach einem der vorher gehenden Ansprüche,
**dadurch gekennzeichnet, dass**
wenigstens 50%, bevorzugt wenigstens 90%, besonders bevorzugt wenigstens 98% aller Bündel (2) in der Florschicht (1) einen gekrümmten Verlauf aufweisen.

5. Florschicht, nach einem der vorher gehenden Ansprüche,
**dadurch gekennzeichnet, dass**
die zweite Krümmung (K2) im Wesentlichen Null ist.

6. Florschicht, nach einem der vorher gehenden Ansprüche,
**dadurch gekennzeichnet, dass**
die Mehrzahl an Carbonfasern (10) umfassende Bündel (2) nicht länger als 15 cm, und insbesondere nicht länger als 10 cm sind.

7. Florschicht, nach einem der vorher gehenden Ansprüche,
**dadurch gekennzeichnet, dass**
die mittleren Bündellängen der gekrümmt verlaufenden Bündel in der Florschicht bevorzugt um wenigstens 100%, oder sogar um mehr als 200% variieren.

8. Florschicht, nach einem der vorhergehenden Ansprüche,
**dadurch gekennzeichnet, dass**
eine Anzahl an gekrümmt verlaufenden Bündeln (2) wenigstens 200, bevorzugt wenigstens 500 und besonders bevorzugt wenigstens 1000 Carbonfasern (10) umfassen.

9. Florschicht, nach einem der vorhergehenden Ansprüche,
**dadurch gekennzeichnet, dass**
die Florschicht (1) eine Flächenmasse von höchstens 50 g/m² und nicht weniger als 10 g/m², bevorzugt zwischen 35 g/m² und 25 g/m² aufweist.

10. Vlies oder Vliesstoff,
**dadurch gekennzeichnet, dass**
er wenigstens zwei Florschichten (1) gemäß einem der vorher gehenden Ansprüche aufweist, welche insbesondere miteinander vernadelt sind.

11. Vliesstoff,
**dadurch gekennzeichnet, dass**
er eine Florschicht (1) gemäß einem der vorher gehenden Ansprüche 1 bis 9 aufweist, welche zur Verfestigung vernadelt ist.

12. Vlies oder Vliesstoff nach Anspruch 10,
**dadurch gekennzeichnet, dass**
die Orientierung der gekrümmt verlaufenden Bündel (2) In einer Florschicht (1) Im Vergleich zu der Orientierung der gekrümmt verlaufenden Bündel (2) in einer anderen Florschicht (1) voneinander um wenigstens 5° abweicht, sich insbesondere um einen Winkelbetrag von 15°, 30°, 45°, 60°, 75° oder 80° unterscheiden.

13. Vlies oder Vliesstoff nach einem der Ansprüche 10 bis 12,
**dadurch gekennzeichnet, dass**
wenigstens zwei Florschichten (1) miteinander bzw. eine Florschicht (1) zur Verfestigung vernadelt sind/ist, wobei im Mittel wenigstens 1 Vernadelungseinstich, bevorzugt wenigstens 5 Vernadelungseinstiche auf einer Fläche von 1 cm² vorliegen.

14. Verfahren zur Herstellung einer Florschicht (1), umfassend folgende Schritte:
- Einbringen von Carbonfasern (10) umfassende Bündel (2) in eine Krempelvorrichtung (20);
- Betreiben der Krempelvorrichtung (20) in der Art, dass die Bündel (2) nicht vollständig zu Einzelfasern vereinzelt werden, jedoch Carbonfasern (10) der Bündel (2) mit weiteren Fasern (10) miteinander verschlungen werden;
- Abnehmen der Florschicht (10) aus der Krempelvorrichtung (20);

15. Harzimprägniertes Bauteil, umfassend eine Florschicht (1) nach einem der Ansprüche 1 bis 9 bzw. ein Vlies oder einen Vliesstoff nach einem der Ansprüche 10 bis 13, welches Bauteil insbesondere als ein Bauteil eines Fahrzeugs ausgeformt ist.

## Claims

1. Fibrous web layer (1) comprising a plurality of bundles (2) which contain carbon fibres (10),
and **characterised in that**
at least some of the bundles (2) have a curvature which comprises one curved vertex area (6) of a first curvature (K1) between the bundle ends and at least one bundle end area (7), arranged at the bundle ends, of a second curvature (K2), the first curvature (K1) being larger than the second curvature (K2), in particular at least 50 % larger.

2. Fibrous web layer according to claim 1,
**characterised in that**
the orientation of a plurality of the curved bundles (2) is substantially the same, in other words, for example, the course of at least one of the bundle end area (7) of a curved bundle (2) progresses in substantially the same orientation when compared with other bundle end areas (7) of other curved bundles (2).

3. Fibrous web layer according to either of the preceding claims,
**characterised in that**
the two bundle ends of curved bundles (2) each comprise a bundle end area (7) having a second curvature (K2), the two second curvatures (K2) in particular being smaller than the first curvature (K1), preferably at least 50 % smaller.

4. Fibrous web layer according to any of the proceeding claims,
**characterised in that**
at least 50 %, preferably at least 90 %, most preferably at least 98 % of all the bundles (2) in the fibrous web layer (1) are curved.

5. Fibrous web layer according to any of the preceding claims,
**characterised in that**
the second curvature (K2) is substantially zero.

6. Fibrous web layer according to any of the preceding claims,
**characterised in that**
the plurality of bundles (2) containing carbon fibres (10) are no longer than 15 cm, and in particular no longer than 10 cm.

7. Fibrous web layer according to any of the preceding claims,
**characterised in that**
the average bundle lengths of the curved bundles in the fibrous web layer preferably vary by at least 100 %, or even by more than 200 %.

8. Fibrous web layer according to any of the preceding claims,
**characterised in that**
a number of curved bundles (2) contain at least 200, preferably at least 500, and most preferably at least 1000 carbon fibres (10).

9. Fibrous web layer according to any of the preceding claims,
**characterised in that**
the fibrous web layer (1) has a mass per unit area of at most 50 g/m² and of no less than 10 g/m², preferably of between 35 g/m² and 25 g/m².

10. Nonwoven or nonwoven material,
**characterised in that**
it comprises at least two fibrous web layers (1) according to any of the preceding claims, which are in particular needled together.

11. Nonwoven material,
**characterised in that**
it comprises one fibrous web layer (1) according to any of the preceding claims 1 to 9, which is needled for the purpose of solidification.

12. Nonwoven or nonwoven material according to claim 10,
**characterised in that**
the orientation of the curved bundles (2) in a fibrous web layer (1) and the orientation of the curved bundles (2) in another fibrous web layer (1) deviate from one another by least 5°, in particular differ by an angle of 15°, 30°, 45", 60°, 75° or 90°.

13. Nonwoven or nonwoven material according to any of claims 10 to 12,
**characterised in that**
at least two fibrous web layers (1) are needled together or one fibrous web layer (1) is needled for the purpose of solidification, there being on average at least 1 needle puncture, preferably at last 5 needle punctures, on a surface area of 1 cm².

14. Method for producing a fibrous web layer (1), comprising the following steps:
- inserting bundles (2) which contain carbon fibres (10) into a carding machine (20);
- operating the carding machine (20) such that the bundles (2) are not completely separated into individual fibres, yet carbon fibres (10) from the bundle (2) are intertwined with other fibres (10);
- removing the fibrous web layer (10) from the carding machine (20).

15. Resin-impregnated component comprising a fibrous web layer (1) according to any of claims 1 to 9 or a nonwoven or nonwoven material according to any of claims 10 to 13, which component is in particular formed as a component of a vehicle.

## Revendications

1. Couche de voile (1), qui comprend une pluralité de faisceaux (2) contenant des fibres de carbone (10),
et **caractérisée en ce**
**qu'**au moins quelques-uns des faisceaux (2) ont un tracé courbe qui comprend une zone de sommet (6) courbe d'une première courbure (K1) entre les extrémités de faisceaux et au moins une zone d'extrémités de faisceaux (7) disposée sur les extrémités de faisceaux d'une deuxième courbure (K2), la première courbure (K1) étant plus grande que la deuxième courbure (K2), en particulier plus grande d'au moins 50 %.

2. Couche de voile selon la revendication 1,
**caractérisée en ce que**
l'orientation d'une pluralité des faisceaux (2) courbes est essentiellement identique, et donc à peu près le tracé d'au moins une des zones d'extrémités de faisceaux (7) d'un faisceau (2) courbe a, par rapport à d'autres zones d'extrémités de faisceaux (7) d'autres faisceaux (2) courbes, un tracé essentiellement d'orientation identique.

3. Couche de voile selon l'une des revendications précédentes,
**caractérisée en ce que**
les deux extrémités de faisceaux de faisceaux (2) courbes comprennent respectivement une zone d'extrémités de faisceaux (7) ayant une deuxième courbure (K2), dans laquelle en particulier les deux deuxièmes courbures (K2) sont plus petites que la première courbure (K1), de préférence plus petites d'au moins 50 %.

4. Couche de voile selon l'une des revendications précédentes,
**caractérisée en ce**
**qu'**au moins 50 %, de préférence au moins 90 %, de façon particulièrement préférée au moins 98 % de tous les faisceaux (2) dans la couche de voile (1) ont un tracé courbe.

5. Couche de voile selon l'une des revendications précédentes,
**caractérisée en ce que**
la deuxième courbure (K2) est essentiellement nulle.

6. Couche de voile selon l'une des revendications précédentes,
**caractérisée en ce que**
la pluralité de faisceaux (2) contenant des fibres de carbone (10) ont une longueur ne dépassant pas 15 cm, et en particulier ont une longueur ne dépassant pas 10 cm.

7. Couche de voile selon l'une des revendications précédentes,
**caractérisée en ce que**
les longueurs centrales de faisceaux des faisceaux courbes dans la couche de voile varient de préférence d'au moins 100 %, et même de plus de 200 %.

8. Couche de voile selon l'une des revendications précédentes,
**caractérisée en ce**
**qu'**un certain nombre de faisceaux (2) courbes contiennent au moins 200, de préférence au moins 500 et de façon particulièrement préférée au moins 1 000 fibres de carbone (10).

9. Couche de voile selon l'une des revendications précédentes,
**caractérisée en ce que**
la couche de voile (1) a une masse surfacique de 50 g/m² au maximum et non inférieure à 10 g/m², de préférence entre 35 g/m² et 25 g/m².

10. Non-tissé ou tissu de toison,
caractérisé(e) en ce
qu'elle/qu'il comprend au moins deux couches de voile (1) selon l'une des revendications précédentes qui sont en particulier assemblées l'une à l'autre par aiguilletage.

11. Tissu de toison,
**caractérisé en ce**
**qu'**il comprend une couche de voile (1) selon l'une des revendications précédentes 1 à 9 qui est aiguilletée à des fins de consolidation.

12. Non-tissé ou tissu de toison selon la revendication 10
caractérisé(e) en ce que,
par rapport à l'orientation des faisceaux (2) courbes dans une autre couche de voile (1), l'orientation des faisceaux (2) courbes dans une couche de voile (1) diverge d'au moins 5°, en particulier a une différence de valeur angulaire de 15°, 30°, 45°, 60°, 75° ou 90°.

13. Non-tissé ou tissu de toison selon l'une des revendications 10 à 12 caractérisé(e) en ce
qu'au moins deux couches de voile (1) sont aiguilletées l'une avec l'autre ou respectivement une couche de voile (1) est aiguilletée à des fins de consolidation, en moyenne au moins 1 piqûre d'aiguilletage, de préférence au moins 5 piqûres d'aiguilletage, étant présentes sur une surface de 1 cm².

14. Procédé de fabrication d'une couche de voile (1), comprenant les étapes suivantes :
- Mise en place de faisceaux (2) contenant des fibres de carbone (10) dans un dispositif de cardage (20) ;
- Fonctionnement du dispositif de cardage (20) de telle sorte que les faisceaux (2) ne sont pas complètement séparés en fibres individuelles mais de telle sorte que des fibres de carbone (10) des faisceaux (2) sont entrelacées avec d'autres fibres (10) ;
- Enlèvement de la couche de voile (10) hors du dispositif de cardage (20).

15. Composant imprégné de résine, comprenant une couche de voile (1) selon l'une des revendications 1 à 9, ou un non-tissé ou tissu de toison selon l'une des revendications 10 à 13, lequel composant est conformé en particulier en tant que composant d'un véhicule.
